# EUROPEAN PATENT APPLICATION

(11) **EP 2 727 753 A1**
(43) Date of publication of application: **07.05.2014**
(21) Application number: 12382422.9
(22) Date of filing: 31.10.2012
(51) Int. Cl.: B60G 21/05, B60G 7/00

(54) **Suspension for an automotive vehicle**

(71) Applicant: Mosteiro Goyoaga, Jose Ramon, 48340 Amorebieta - Vizcaya (ES)
(72) Inventor: Mosteiro Goyoaga, Jose Ramon, 48340 Amorebieta - Vizcaya (ES)
(74) Representative: Carpintero Lopez, Francisco

(57) **Abstract**

The present invention relates to a suspension for an automotive vehicle, comprising a torsion bar (5) where the suspension comprises a housing (1) on which a bearing is mounted for each wheel (6), each housing (1) having welded thereto a longitudinal arm (2) the end of which opposite the housing (1) has welded thereto a wheel support (3) on which there is mounted a wheel hub (4) on which a wheel (6) can be mounted, the longitudinal arms (2) of each side of the suspension being joined by means of a torsion bar (5), where the wheel support (3) comprises a plane A in contact with a plane B of the wheel hub (4), which in turn comprises a plane C for contacting the wheel (6), where each wheel hub (4) and each corresponding wheel support (3) are joined by means of elongated holes (9) located in any of said wheel hub (4) and wheel support (3), there being an angle θ between plane C and planes A and B with respect to a vertical axis, and an angle β between plane C and planes A and B with respect to a longitudinal axis, such that the elongated holes (9) allow the rotation, a specific angle of adjustment Ω, of plane B with respect to plane A with respect to an axis K perpendicular to planes A and B.

## Description

### Technical Field of the Invention

The present invention relates to a suspension for an automotive vehicle, having an application in the automotive industry, and more specifically in the field of the suspensions for vehicles, which allows adjusting the wheel angles, specifically the camber and toe-in angles in a combined manner in any type of automotive vehicle the suspension of which is equipped with an axle or torsion bar.

### Background of the Invention

An automotive vehicle provides users with the possibility of moving from one place to another in the safest, most stable and comfortable conditions possible. To enable providing the automotive vehicle with these features, conventional automotive vehicles are equipped with suspensions joining each wheel with the self-supporting chassis of the vehicle, it primary function being to absorb or damp irregularities of the running terrain or surface. In most cases, suspensions are ultimately able to absorb said irregularities originating from the rolling surface through the shock absorbers and springs by means of the relative movement of the suspension arms. Suspensions in automotive vehicles are divided into two groups, according to the front axle and the rear axle. In turn, these two groups are divided according to the left side and the right side, although in most cases these two sides are joined.

There is a type of suspension known as torsion bar suspension, where the longitudinal suspension arm of each side is joined by means of a transverse component usually referred to as a torsion bar. Such suspensions are usually mounted in the rear axle of automotive vehicles. Such suspension requires a smaller number of components and bearings than other types of suspension, such as Multi-Link suspension, Double Wishbone suspension, etc. For this reason, the costs for manufacturing such suspensions with a torsion bar are lower.

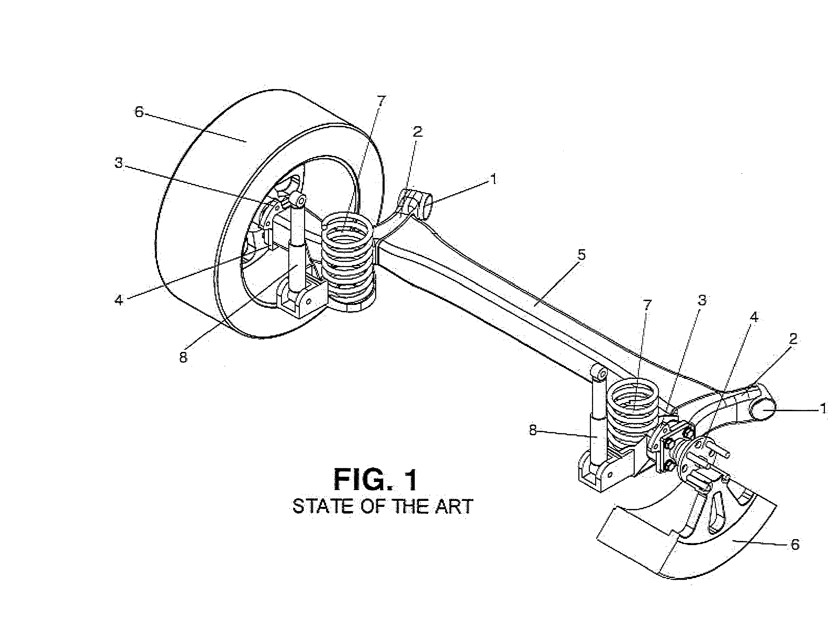

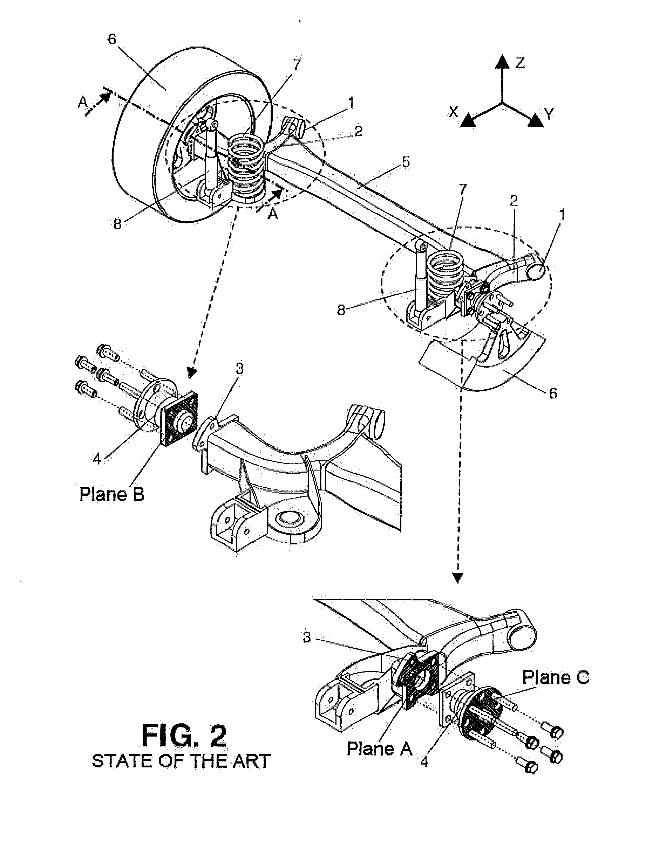

Figures 1 and 2 show a torsion bar type suspension of the state of the art. In said figure it can be seen how the suspension comprises an element in which a housing (1) is defined, for example based on a tubular section, on which a bearing is mounted for each wheel (6). A longitudinal arm (2) is welded to each element in which each housing (1) is defined. Each longitudinal arm (2) is welded to a wheel support (3) at the end opposite the housing (1). A wheel hub (4) is mounted on each wheel support (3). As is seen in the figures, both longitudinal arms (2) are joined by a torsion bar (5). This entire assembly is joined to the self-supporting chassis of the automotive vehicle, which is not depicted, by means of the bearings which are mounted on the housings (1). A wheel (6) is fixed in turn on each wheel hub (4), usually by means of lug nuts. On the other hand, springs (7) and shock absorbers (8), which are positioned such that their movement maintains a specific relationship with the movement of the wheel (6) while the vehicle is circulating, are mounted between the torsion bar (5) and the self-supporting chassis of the vehicle.

In reference to the sub-assembly depicted in detail A1 of Figure 2, there is a face or surface in the wheel support (3) which is identified as plane A. On the other hand, when observing the sub-assembly depicted in detail A2 of Figure 2, there is a face or surface in the wheel hub (4) which is identified as plane B. The toe-in angle of the wheel (6) is the angle that is defined between the longitudinal axis of the vehicle, considering that said longitudinal axis is an axis drawn from the front axle of the vehicle to the rear axle of the vehicle, and plane A or plane B. The camber angle of the wheel (6) is the angle that is defined between the vertical axis of the vehicle, considering that said vertical axis is an axis drawn parallel to the vehicle height dimension, and plane A or plane B. The inclination of plane A with respect to the longitudinal axis of the vehicle causes a variation in the camber angle of the wheel (6). On the other hand, the inclination of plane A with respect to the vertical axis of the vehicle causes a variation in the toe-in angle of the wheel (6). The combination of the inclinations of plane A with respect to both longitudinal and vertical axes allows achieving specific camber and toe-in angle values for each wheel (6) respectively.

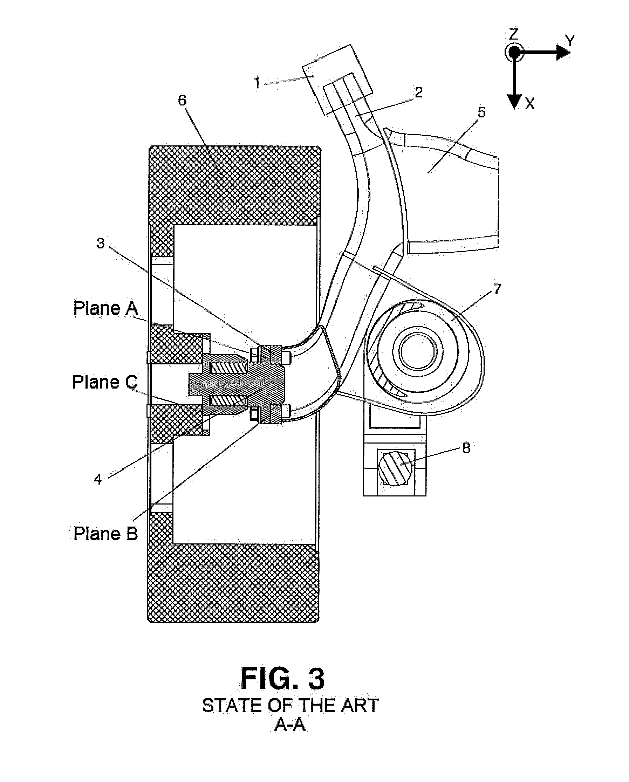

The wheel hub (4) is mounted on plane A of the wheel support (3), such that plane B contacts plane A. The axis of rotation of the wheel (6) is thus completely perpendicular to plane A and plane B. For this reason, the plane pertaining to the wheel hub (4) on which the wheel (6) is mounted is a plane C having the same angle of inclination as plane A and plane B with respect to the aforementioned longitudinal and vertical axes of the vehicle. When observing Figure 3, it is seen that planes A, B and C are parallel at all times in suspensions of the state of the art.

In the case of vehicles with a torsion bar, the toe-in and camber angles of the wheel are permanently defined at the time of manufacturing the automotive vehicle. Once the entire vehicle is assembled, if the wheels are not correctly aligned, said angles cannot be adjusted, which is a huge drawback compared to other types of suspensions, such as a Multi-Link suspension, Double Wishbone suspension, etc., because in such suspensions the wheel angles can be adjusted if there are any manufacturing tolerance irregularities.

There are suspensions today that try to solve this drawback which on one hand do so by means of a dual modification of angles by arranging shims and wedges, as in patent document numbers US-5383678, JP-2002274134, FR-2959474 or US2006138740, and on the other hand by arranging of a plurality of mounting holes, where each one must be carefully adjusted individually in order to achieve a specific angle, as described in the Korean patent application number KR-20110075830. Nevertheless, both solutions are complex and require various rotations and precise adjustments.

### Description of the Invention

The present invention relates to a suspension for an automotive vehicle as described in claim 1. The purpose of the invention is to allow adjusting the toe-in and camber angle of each wheel without adding any extra component to the system. The invention also allows adjusting the toe-in and cambers of the wheel for each vehicle model in the production lines without having the need to modify the production lines to achieve the desired toe-in and camber angles. For this reason it is defined as a modular system which allows adjusting the wheel angles during the assembly operation.

Said combined variation of the camber and toe-in angles is achieved by means of a single relative rotational movement between two planes, i.e., between a plane A located in the wheel support and a plane B located in the wheel hub. Even the possibility of there being specific marked positions in said wheel support and said wheel hub for achieving a combination of previously defined camber and toe-in angles is contemplated.

The invention allows adjusting the wheel angles in any type of automotive vehicle the suspension of which is equipped with an axle or torsion bar in a combined manner. Said angle variation can be adjusted by loosening the screws joining the wheel hub to the torsion bar, which is joined to the wheel support, and by rotating said wheel hub with respect to the wheel support welded to the torsion bar to achieve the desired camber and toe-in angles of the wheel, after which the screws are again tightened for fixing the wheels in said required position.

Said camber and toe-in angles can thus be quickly and easily adjusted in a combined manner without a need for any additional element or part. The invention only requires modifying the existing parts in the vehicle and manufacturing them in a defined manner. Each vehicle model or platform can thus have specific wheel angles which can be predefined by specific elements, such as positioners and holes, without the need for having to have a stock of different parts for being able to achieve said angles.

The present invention deals with how the camber and toe-in angles between the wheel hub and its own wheel support must be combined so that the desired camber and toe-in angles of the wheel can be obtained by means of a relative rotational movement between said wheel hub and said support. This relative rotational movement is allowed by means of elongated holes or mounting holes comprised in the wheel hub, although it is contemplated that they are likewise located in the wheel support. In this sense, the elongated holes can be located in the securing area of each wheel hub for securing it with the wheel support, or the other way around, i.e., the elongated holes can be located in the securing area of each wheel support for securing it with the wheel hub.

### Description of the Drawings

To complement the description that is being made and for the purpose of aiding to better understand the features of the invention according to a preferred practical embodiment thereof, a set of drawings is attached as an integral part of said description in which the following has been depicted with an illustrative and non-limiting character:
Figure 1 shows a perspective view of a torsion bar suspension of the state of the art used in the rear axle of a vehicle.
Figure 2 shows a perspective view of a torsion bar suspension of the state of the art in which the wheel hub is screwed on from the outside to the inside, along with two detail views A1 and A2 for each side.
Figure 3 shows cross-section along line A-A of Figure 2.
Figure 4 shows a perspective view of a torsion bar suspension according to the invention, in which case the screws are screwed into the torsion bar from the outside to the inside, as seen in the detail depicted in the actual figure. Figure 5 shows a cross-section along line B-B of Figure 4.
Figure 6 shows a cross-section along line C-C of Figure 4.
Figure 7 shows a perspective view from which the process to be followed for adjusting the camber and toe-in angles of a wheel can be understood.
Figure 8 shows a cross-section along line J-J of Figure 7, seen from the inside to the outside.
Figure 9 shows a cross-section along line M-M of Figure 7, seen from the outside to the inside.
Figure 10 shows a cross-section along line D-D of Figure 7.
Figure 11 shows a cross-section along line E-E of Figure 7.
Figure 12 shows a graph in which the variation of angle Ψ (camber angle of the wheel) as a function of angle Ω (angle of adjustment referring to the axis K) for different angles Θ and an angle β equal to 0° can be seen.
Figure 13 shows a graph in which the variation of angle α (toe-in angle of the wheel) as a function of angle Ω (angle of adjustment referring to the axis K) for different angles Θ and an angle β equal to 0° can be seen.

### Preferred Embodiment of the Invention

In view of the mentioned figures, it must be indicated that the coordinate axis has been positioned such that the point of origin is located on the front axle and in the center of the vehicle. The positive X has been oriented from the front axle to the rear axle. The positive Y has been oriented from the driver side to the passenger side, taking into account the European driving position. Positive Z positive has been considered from the lowest part to the highest part of the vehicle.

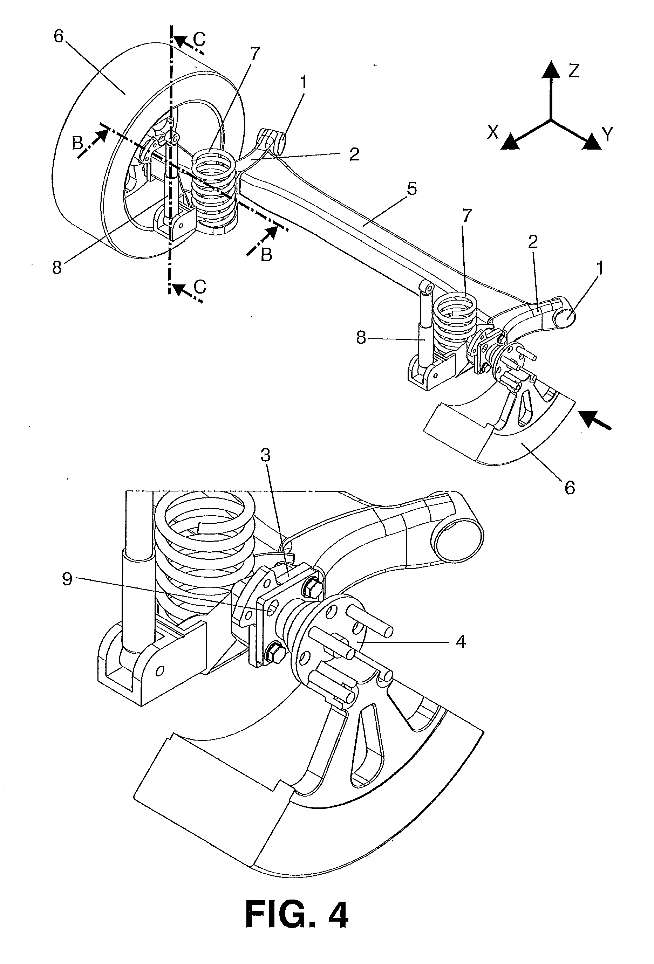

Figure 4 shows a construction for such torsion bar (5) in a rear axle of an automotive vehicle where a housing (1) on which a bearing is mounted can be seen for each side. A longitudinal arm (2) is welded to each housing (1). The wheel supports (3) are welded at the ends opposite the housings (1) welded in the two longitudinal arms (2). The wheel hubs (4) with threads are mounted on these supports. As can be observed, the two longitudinal arms (2) are joined by a component called a torsion bar (5). This entire assembly is joined to the self-supporting chassis of the vehicle, not depicted in the drawings, by means of the bearings mounted on the housings (1). The wheels (6) are mounted on the wheel hubs (4). On the other hand, the springs (7) and the shock absorbers (8) are mounted between the torsion bar (5) and the self-supporting chassis. They are positioned such that their movement maintains a specific relationship with the movement of the wheel (6).

Although the embodiment depicted in Figure 4 shows a construction of a torsion bar suspension according to the invention in which the wheel hub is screwed on from the outside to the inside, it is completely indifferent if the screws are oriented the other way around, and even if the wheel (6) is connected to the wheel hub (4) by means of a through bolt tightened with a nut.

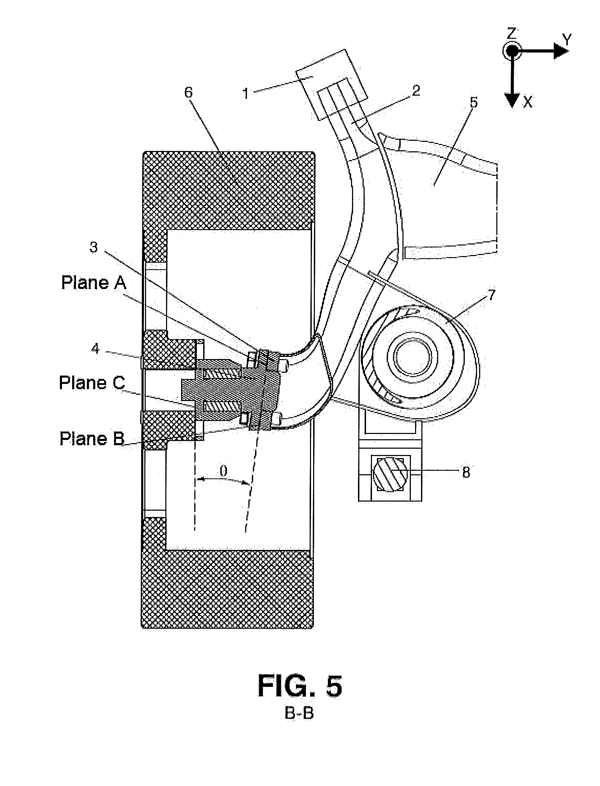

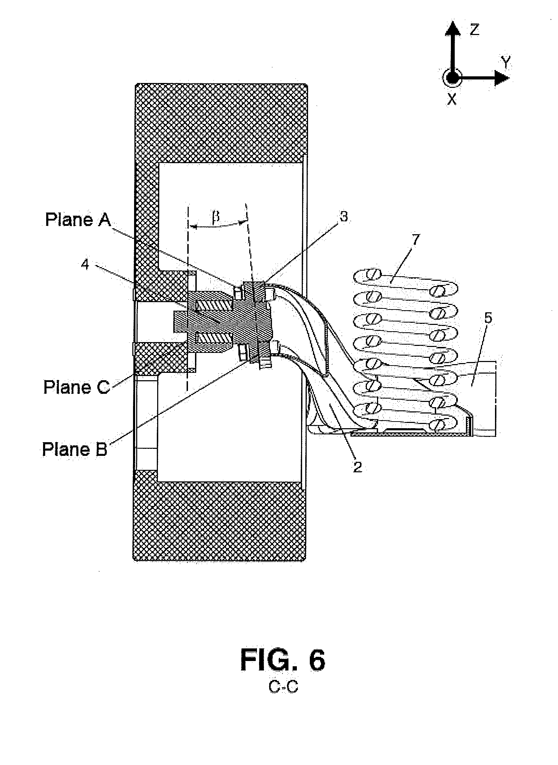

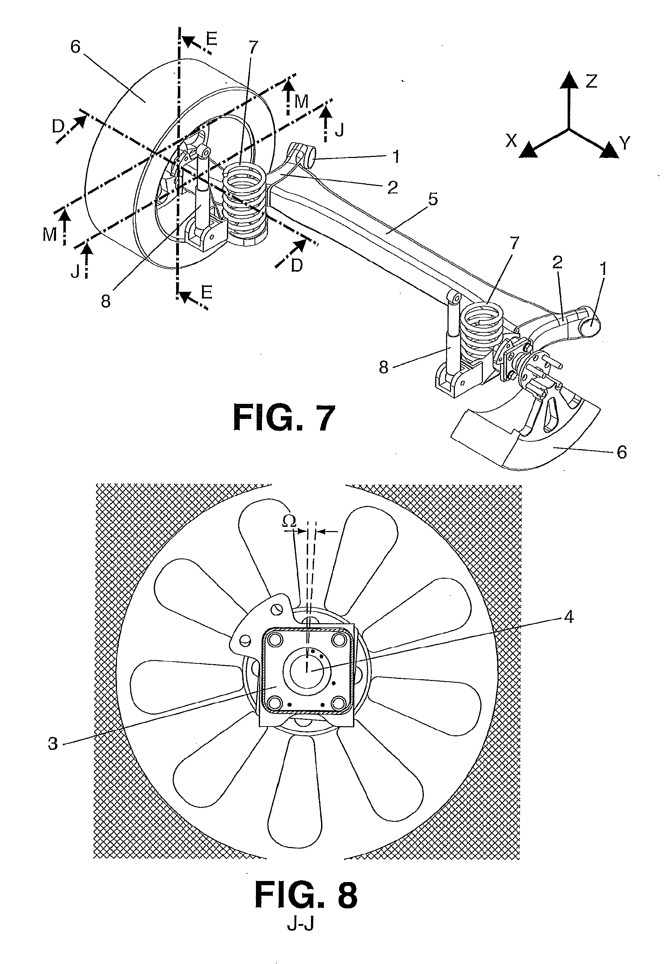

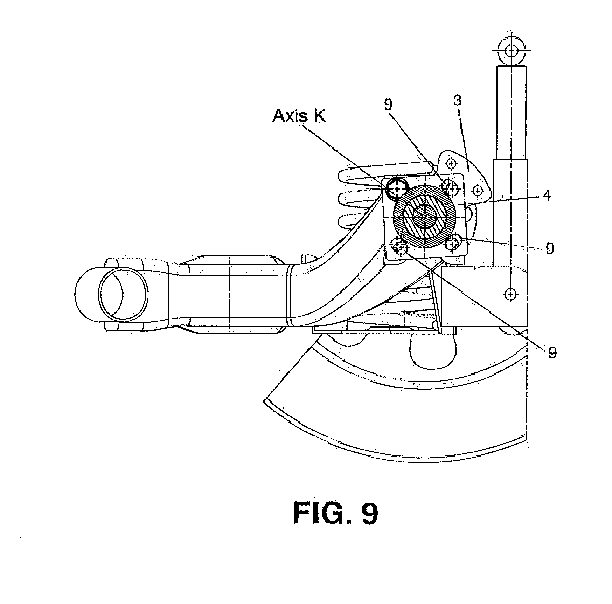

In view of section M-M of Figure 7 depicted in Figure 9, it is observed that mounting holes or elongated holes (9) have been added in the wheel hub (4) in the securing area for securing it to the wheel support (3). If Figure 5 is observed, it is seen that an angle Θ between plane C and planes A and B which does not exist in any type of torsion bar (5) of the state of the art has been added. Figure 6 shows that an angle β between plane C and planes A and B has also been added in this case.

Adding these angles Θ and β does not dispense with the possibility of having an initial camber or toe-in of the wheel (6). If an initial camber of the wheel (6) is desired, plane A, plane B and plane C would have to be rotated with respect to the X axis of the vehicle, i.e., with respect to the longitudinal axis, likewise being able to maintain angles Θ and β. If an initial toe-in of the wheel (6) is desired, it is only necessary to rotate plane A, plane B and plane C with respect to the Z axis of the vehicle, i.e., with respect to the vertical axis, likewise being able to maintain angles Θ and β.

In view of section M-M of Figure 7 depicted in Figure 9, elongated holes (9) in the wheel hub (4) are seen. These elongated holes (9) allow the rotation of plane B with respect to plane A about axis K. The increase or reduction of the angle Ω indicated in the detail of Figure 8 allows adjusting the wheel angles.

Defining markings, holes, engravings, etc., on the wheel hub (4) and the wheel support (3), for defining specific positions predetermined by the vehicle manufacturer for each vehicle model for obtaining different combinations of toe-in and camber angles between the wheel hub (4) and the wheel support (3) is also contemplated even though it has not been depicted.

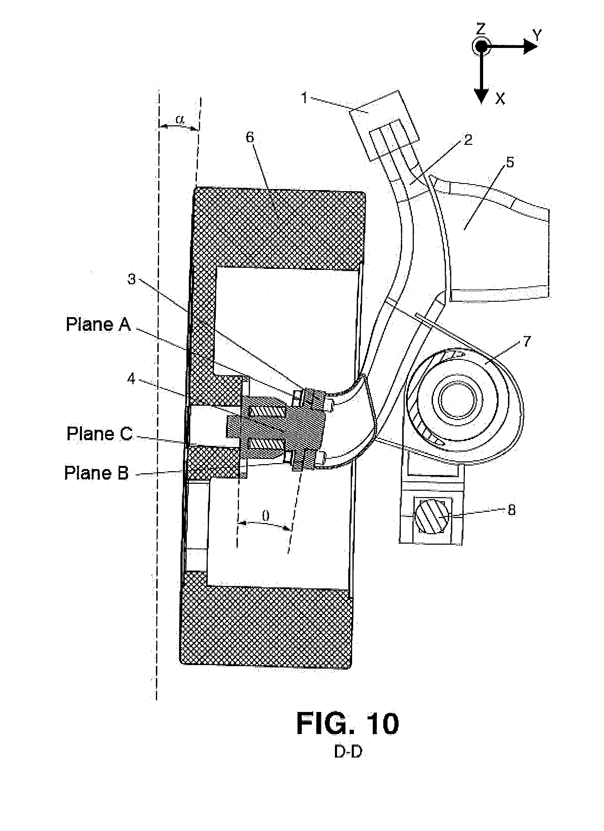

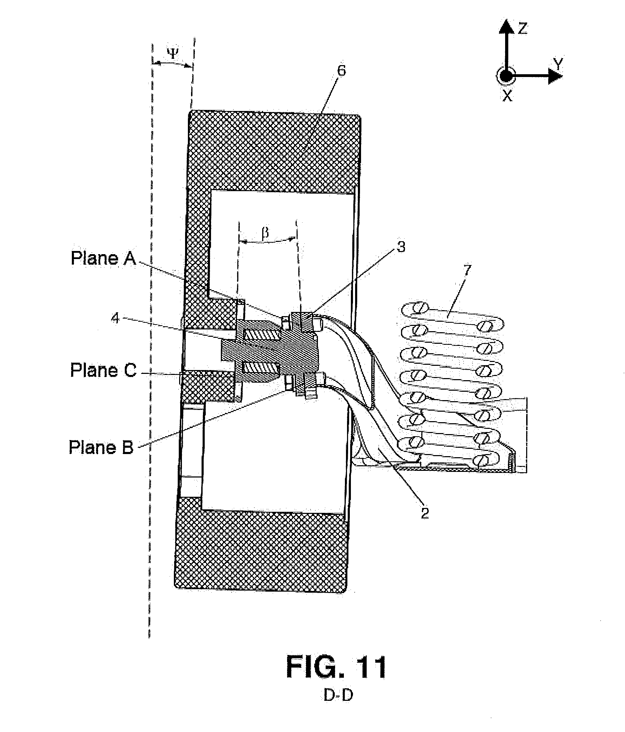

As shown in Figure 10, an angle α which is equivalent to the toe-in angle of the wheel is obtained by means of the present invention. If Figure 11 is observed, it can be seen that the rotational movement creates another angle Ψ which is equivalent to the camber angle of the wheel.

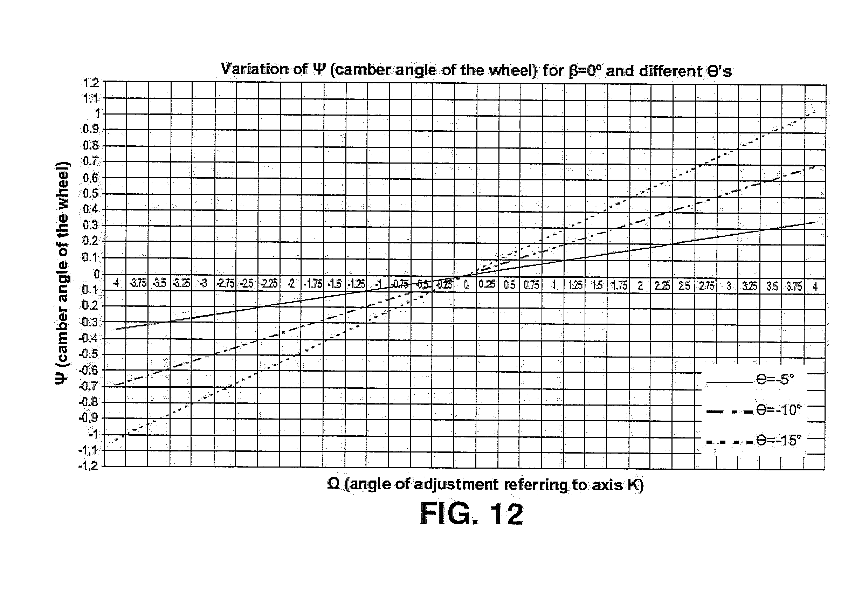

The graph depicted in Figure 12 shows a practical example of the values which can be obtained with the combination of the aforementioned angles. It has been considered that the initial camber and the initial toe-in of the wheel are 0° before adjusting with respect to axis K. The values of -5°,-10° and -15° have been taken for Θ. Angle β has been left at 0°. The graph reflects the different angles of Ψ (camber angle of the wheel) which can be obtained as a function of the angle of adjustment Ω.

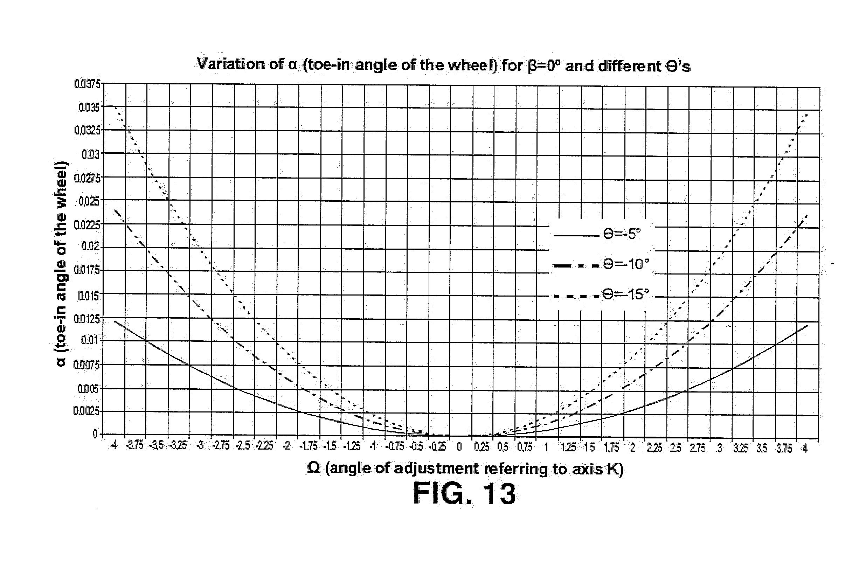

In the case of the graph depicted in Figure 13, it has been considered that the initial camber and the initial toe-in of the wheel are 0° before adjusting with respect to axis K. The values of -5°,-10° and -15° have been taken for Θ. Angle β has been left at 0°. The graph reflects the different angles of α (toe-in angle of the wheel) which can be obtained as a function of the angle of adjustment Ω.

If the graphs of Figures 12 and 13 are observed and the maximum values obtained for Ψ and α are compared to the maximum adjustment Ω of the system, it is observed that the maximum variation of Ψ (camber angle of the wheel) in this case is 1.035° compared to 0.035° of angle α (toe-in angle of the wheel). This means that this combination of angles between Θ, β and Ω allows modifying angle Ψ (camber angle of the wheel) without causing a large variation of angle α (toe-in angle of the wheel). On the other hand, it is observed that the variation of angle α always has a negative tendency, regardless of whether angle Ψ is positive or negative, which gives the system another positive advantage. Using the graphs of Figures 12 and 13 as a sample, it is understood that the combination of angles Θ, β and Ω allows infinite combinations, which allows obtaining angles α and Ψ desired by the vehicle manufacturer.

In view of this description and set of drawings, the person skilled in the art will understand that the embodiments of the invention that have been described can be combined in many ways within the object of the invention. The invention has been described according to several preferred embodiments thereof, but for the person skilled in the art it will be evident that many variations can be introduced in said preferred embodiments without exceeding the object of the claimed invention.

## Claims

1. Suspension for an automotive vehicle, comprising a torsion bar (5), where the suspension comprises a housing (1) on which a bearing is mounted for each wheel (6), each housing (1) having welded thereto a longitudinal arm (2) the end of which opposite the housing (1) has welded thereto a wheel support (3) on which there is mounted a wheel hub (4) on which a wheel (6) can be mounted, the longitudinal arms (2) of each side of the suspension being joined by means of a torsion bar (5), where the wheel support (3) comprises a plane A in contact with a plane B of the wheel hub (4), which in turn comprises a plane C for contacting the wheel (6), **characterized in that** each wheel hub (4) and each corresponding wheel support (3) are joined by means of elongated holes (9) located in any of said wheel hub (4) and wheel support (3), there being an angle Θ between plane C and planes A and B with respect to a vertical axis, and an angle β between plane C and planes A and B with respect to a longitudinal axis, such that the elongated holes (9) allow the rotation, a specific angle of adjustment Ω, of plane B with respect to plane A with respect to an axis K perpendicular to planes A and B.

2. Suspension for an automotive vehicle according to claim 1, wherein regardless of the values of angles Θ and β, the suspension has an initial camber and/or toe-in angle of the wheel (6).

3. Suspension for an automotive vehicle according to any of claims 1 and 2, comprising markings for defining predetermined positions for obtaining different combinations of toe-in and camber angles between the wheel hub (4) and the wheel support (3).

4. Suspension for an automotive vehicle according to any of the preceding claims, wherein the elongated holes (9) are located in the securing area of each wheel hub (4) for securing it with the wheel support (3).

5. Suspension for an automotive vehicle according to any of claims 1 to 3, wherein the elongated holes (9) are located in the securing area of each wheel support (3) for securing it with the wheel hub (4).
